Europäisches Patentamt

European Patent Office

Office européen des brevets

(19)

(11) Publication number : **0 074 058 B1**

# EUROPEAN PATENT SPECIFICATION

(12)

(45) Date of publication of patent specification :
**11.01.95 Bulletin 95/02**

(51) Int. Cl.[6] : **G11B 7/26**, B41M 5/24,
B05D 7/00

(21) Application number : **82107988.6**

(22) Date of filing : **31.08.82**

(54) **Disc coating method.**

(30) Priority : **08.09.81 JP 142062/81**

(43) Date of publication of application :
**16.03.83 Bulletin 83/11**

(45) Publication of the grant of the patent :
**11.01.95 Bulletin 95/02**

(84) Designated Contracting States :
**DE FR GB**

(56) References cited :
**EP-A- 0 037 607**
**FR-A- 789 741**
**FR-A- 2 275 322**
**FR-A- 2 275 841**
**US-A- 2 272 157**
**US-A- 2 388 126**
**US-A- 3 795 534**

(56) References cited :
**CHEMICAL ABSTRACTS, vol. 91, no. 24, December 1979, page 609, no. 202141m, Columbus, Ohio, USA; G.B. FEFFERMAN et al.:
"Sealed extrusion - a coating method for photoprinting UV curable liquid resin films" &
NATL. ELECTRON. PACKAG. PROD. CONF. 1979, 101-11**
**JOURNAL OF APPLIED PHYSICS, vol. 49, no. 7, July 1978, pages 3993-3997, American Institute of Physics, New York, USA; D. MEYERHOFER: "Characteristics of resist films produced by spinning"**

(73) Proprietor : **MATSUSHITA ELECTRIC INDUSTRIAL CO., LTD.**
**1006, Oaza Kadoma**
**Kadoma-shi, Osaka-fu, 571 (JP)**

(72) Inventor : **Inoue, Takao**
**28-7, Yamadaikehigashimachi**
**Hirakata-shi Osaka-fu (JP)**
Inventor : **Maeda, Yukio**
**44-30, Himurodai 1-chome**
**Hirakata-shi Osaka-fu (JP)**
Inventor : **Uchida, Masami**
**35-10, Ominemotomachi 2-chome**
**Hirakata-shi Osaka-fu (JP)**

(74) Representative : **Eisenführ, Speiser & Partner**
**Martinistrasse 24**
**D-28195 Bremen (DE)**

EP 0 074 058 B1

## Description

In conventional optical type recording discs, it has been a general practice that after a process of forming a recording layer enabling optical recording and reproducing, on a plastic plate of a circular shape, has been completed, another plastic plates are attached to the recording layer as required so as to protect the recording layer against damage. However, the known optical type recording discs have such an inconvenience that the plastic plates for protecting the recording layer from damage also sustain flaws on the surfaces through contact with dust or improper matters during manufacture. The above described disadvantage also presents a serious problem to optical type recording and reproducing discs utilizing laser beam; namely the flaws produce noises in recording and reproducing signals.

In this connection, the present inventors have disclosed in EPC Patent Application No. 80104306.8, filed July 23, 1980 and EPC Patent Application No. 81102189.8, filed March 24, 1981 that coating compositions are coated and cured on the optical type recording and reproducing discs manufactured by a conventional method so as to form a transparent hard coating film which exhibits an outstanding effect for preventing itself from sustaining flaws. However, the coating compositions disclosed in the above descrived EPC Patent Applications have posed such a new problem that it is difficult to form a uniform coating film and application of the coating compositions to a one-sided coating disc obtained by a conventional horizontal spinner method causes the disc to be distorted. Furthermore, the above described coating compositions have such a disadvantage that when the disc is stopped temporarily after a spinner operation so that ultraviolet rays may be irradiated onto the coating film for during thereof, a little difference in coating film thickness arises between peripheral portions and a central portion of the disc. More specifically, the coating compositions have been disadvantageous in that the disc having a large distortion or the cured coating film of greatly non-uniform thickness makes it difficult to maintain a constant clearance between a semiconductor laser element and the disc, so that it becomes impossible to perform recording and reproduction of signals, thus resulting in deterioration of performance of the disc adversely.

Accordingly, an essential object of the present invention is to provide an improved disc coating method which restricts distortion of an optical type recording disc to a minimum and forms a hard coating film having a uniform thickness on the disc, with substantial elimination of the disadvantages inherent in conventional disc coating method of this kind.

Another important object of the present Invention is to provide an improved disc coating method as described above which is highly reliable in actual use and suitable for mass production at low cost.

In accomplishing these and other objects according to one preferred embodiment of the present invention, there is provided a disc coating method comprising the steps of simultaneously applying a coating liquid in a first step to opposite surfaces of a plastic disc by rotating at a first speed said disc mounted vertically on a rotary shaft and in another step simultaneously curing the coating liquid on the opposite surfaces of said disc while rotating said disc, characterized in that in the first step the coating liquid is applied to the disc, while the disc is rotating at a speed of not more than 200 rpm, in a second step excessive coating liquid is removed from said disc by rotating said disc at a second speed higher than the first speed, and that in a third step the liquid is cured by simultaneously irradiating light energy onto the apposite surfaces of said disc while rotating said disc at a third speed higher than the first speed but equal or lower than the second speed and keeping said disc disposed vertically during the second and third steps, said disc being composed of three layers, namely two plastic plates and a recording layer which is required for optical recording and reproducing and is interposed between said two plastic plates, and said coating liquid forming a hard cured coating film coated on the opposite surfaces of said disc.

According to the invention, the disc is rotated at three different speeds during the three different steps. The third speed, used while curing the coating liquid, is especially higher than the first speed (during which the coating liquid is applied to the disc) but lower than the second speed (during which excessive coating liquid is removed from the disc).

The importance of this feature is due to the following facts: If the rotational speed of the disc in the third step is approximately the same as that of the second step for removing excessive coating liquid, the viscosity of the coating liquid film at the time when the film is cured by irradiating light energy onto the disc drops for a certain time period simultaneously with the progress of the curing reaction. Thus, the coating liquid film is caused to flow, and correspondingly, a flow mark is formed on the film and uneven portions are produced at the outer periphery of the film by surplus coating liquid. This results in abnormal incidence and reflection of the laser beam used to read the disc and write on the disc. If on the other hand the rotational speed of the disc in the curing step is set to be lower than the speed of the first step, i. e. when the coating liquid is applied, the coating liquid is cured too slowly, so that the coating liquid is cured non-uniformly. This results in thin crasings being formed on the surface of the cured film, and again, the laser beam operation is impaired.

As a result, in accordance with the present invention, the disc having both a minimum distortion and, a uniform thickness of the hard coating film can be obtained.

U.S.-A 3,795,534 relates to a method for manufacturing video discs, in which method the discs are rotated at a high speed in order to remove excessive coating liquid, but are rotated at very low rotational speeds of about 2 to 10 rpm while drying the coating. Especially, this citation is directed at coating a video disc master with a thin layer of photoresist on one side only. The photoresist is not cured by exposure to light but by evaporating a solvent, i. e. by drying. While the photoresist dries, the disc is lying flat on a turntable, so that the liquid on its surface evens out under the influence of gravity. It is apparent that no actual influence of centrifugal forces due to the rotation of the disc in the drying step is desired or could even be accepted, since this would interfere with the gravitational effect. Thus, this citation uses a completely different approach, not spreading the coating liquid evenly by centrifugal, rotational forces with the disc being mounted vertically on a rotary shaft and coated on both sides, but rather only coating one side of a disc lying horizontally on a turntable and with the coating liquid slowly drying by evaporation and being spread out evenly by gravitation.

FR-A 789 741 is directed at producing phonographic records coated with a cellulose mixture. This citation mentions the use of a high speed rotation step for removing excessive coating matter; however, there is no hint at the third step and the speed to be chosen for this third step. Rather, the teaching of this citation goes in a different direction, since the slow rotation during the application of the coating as well as the subsequent faster rotation both serve to even out the coating and to remove excess coating. No third, curing step is envisaged at all, the disc being dried during their high speed rotation step.

As a result, these citations therefore could not give any hint whatsoever the average person skilled in the art and faced with the problems, which the invention solves.

Further advantageous embodiments of the invention are defined in the subclaims.

These and other objects and features of the present invention will become apparent from the following description taken in conjunction with the preferred embodiment thereof with reference to the accompanying drawings, in which;

Fig. 1 is a cross-sectional view of a disc to which a disc coating method of the present invention has been applied,

Fig. 2 is a view explanatory of application of coating liquid to opposite planar surfaces of the disc in one of the disc coating methods of the present invention, and

Fig. 3 is a view explanatory of curing of the coating liquid applied to the opposite planar surfaces of the disc in the disc coating method of the present invention.

Before the description of the present invention proceeds, it is to be noted that like parts are designated by like reference numerals throughout several views of the accompanying drawings.

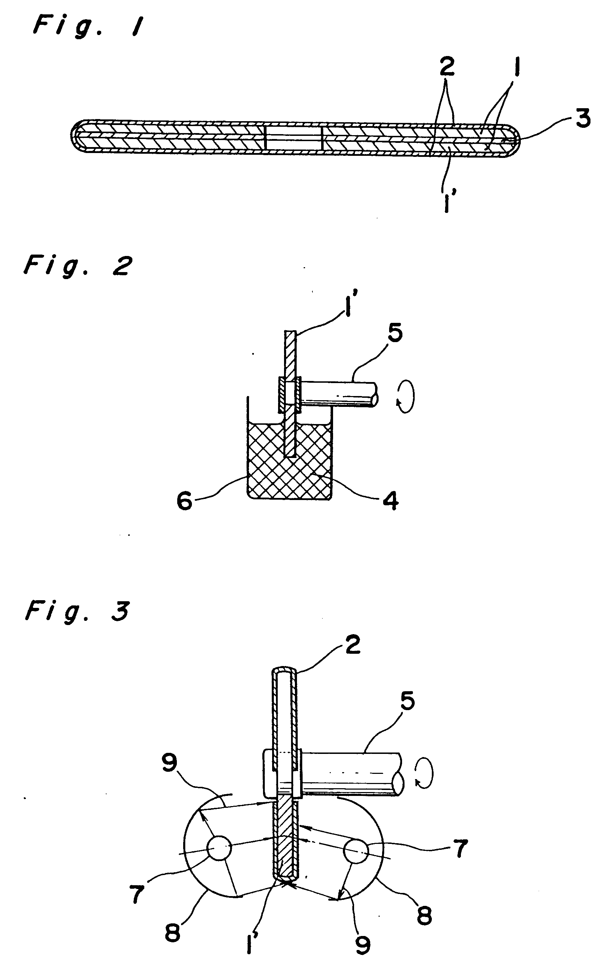

Referring now to the drawings, there is shown in Fig. 1, an optical type recording and reproducing disc to which a disc coating method of the present invention has been applied. The disc comprises a base plate 1' and a hard cured coating film 2 coated on outer surfaces of the base plate 1'. The base plate 1' is composed of three layers, namely two plastic plates 1 and a recording layer 3 which is required for optical recording and reproducing and is interposed between the two plastic plates 1. Each of the plastic plates 1 is made.of acrylic resin and the like and has a diameter of 210 mm with an opening being formed at a central portion thereof. More specifically, the recording layer 3 is designed to work on a principle that irradiation of laser beam onto the recording layer 3 causes its phase transition so as to change its reflectance.

Referring now to Fig. 2, there is shown one example of application of coating liquid 4 to the base plate 1' in the disc coating method of the present invention. After a dip tank 6 is filled with the coating liquid 4, the coating liquid 4 is applied to opposite planar surfaces of the base plate 1' simultaneously, with the base plate 1' being rotated by a rotary shaft 5.

Referring also to Fig. 3, there is shown one example of curing of the coating liquid 4 applied to the opposite planar surfaces of the base plate 1' in the disc coating method of the present invention. The coating liquid 4 applied to the opposite planar surfaces of the base plate 1' is simultaneously cured by ultraviolet rays 9 radiated from two ultraviolet lamps 7 and two reflecting mirrors 8 while rotating the base plate 1' by the rotary shaft 5 used also for applying the coating liquid 4 to the base plate 1' such that one of the two ultraviolet lamps 7 and one of the two reflecting mirrors 8 are disposed at the side of one planar surface of the base plate 1', with the other one of the two ultraviolet lamps 7 and the other one of the two reflecting mirrors 8 being disposed at the side of the other planar surface of the base plate 1'.

More specifically, it is desirable that rotational speed of the rotary shaft 5 should be 200 rpm or less during application of the coating liquid 4 to the base plate 1'. In the case where the rotational speed of the rotary shaft 5 exceeds 200 rpm at that time, bubbles or foams are formed in the coating liquid 4 in the dip tank 6 during application of the coating liquid 4 to the base plate 1', so that pin-holes are formed in the hard cured coating film 2 or the coating liquid 4 applied to the base plate 1' is splashed. Thereafter, the base plate 1' is spaced from the coating liquid 4 in the dip tank 6 after it has been dipped in the coating liquid 4. Then, the base plate 1' should be rotated at speeds of between 1,000 and 2,000 rpm as a spinner operation so as to obtain an excellent coating film having a uniform thickness. Then, in order to obtain the hard cured coating film 2, ultraviolet rays 9 are irradiated onto the coating liquid 4 applied to the base plate 1' as described above.

Although curing conditions of the coating liquid 4 vary according to the capacity of the ultraviolet lamp 7, a distance between each of the ultraviolet lamps 7 and corresponding one of the opposite planar surfaces of the base plate 1', and a cooling method, it is desirable that the base plate 1' be rotated at 1,000 rpm or less in the case where the ultraviolet lamp 7 with a water cooling method has a capacity of 80 W/cm and is spaced 5 cm from corresponding one of the opposite planar surfaces of the base plate 1'. Namely, in the case where the base plate 1' is rotated for curing of the coating liquid 4 at speeds greater than those of the spinner operation for producing the excellent coating film having a uniform thickness, such problems arise that surface roughness of the hard cured coating film becomes large, uneven cured improper matters are left on the peripheral portions of the base plate 1', etc.

Meanwhile, it is desirable that each of the ultraviolet lamps 7 is provided so that the central axis of each of the ultraviolet lamps 7 may be deviated from the central axis of the base plate 1' and more preferably, be disposed between the central axis of the base plate 1' and peripheral edges of the base plate 1'.

It is to be noted here that the plastic plates 1 employed in the present invention should be transparent optically and be capable of fully transmitting light in the range of between 800 nm and 900 nm to be used in the present invention.

Furthermore, as examples of the coating liquid 4, the coating compositions disclosed in the above described EPC Patent Applications can be utilized.

Hereinbelow, effects of the both-sided coating according to the present invention will be described in comparison with conventional one-sided coating with reference to Table 1 showing their experimental data.

The experiments were conducted under the following conditions:

The coating liquid 4 having a viscosity of 16 cps at 25°C was coated on the base plate 1' while rotating the base plate 1' at 50 rpm. The spinner speed was selected as a parameter. Curing by the use of ultraviolet rays was performed for 60 sec. while rotating the base plate 1' at 150 rpm. The plastic plates 1 made of acrylic resin have a diameter of 210 mm.

## Table 1

| Embodiment | Spinner speed (rpm) | Coating | Film thickness (μ) | Distortion (μ) |
|---|---|---|---|---|
| Comparative example 1 | —— | One-sided | 30 | 200 |
| Comparative example 2 | 150 | One-sided | 5 | 100 |
| Comparative example 3 | 1800 | One-sided | 2 | 50 |
| Embodiment 1 | 1800 | Both-sided | 2 | 5 |

It should be noted here that distortions in Table 1 are deviations of the peripheral edges of the base plate 1' measured after completion of curing of the coating liquid, from a reference central axis and a reference plane of the base plate 1' in the initial state.

As is clear from the foregoing, the both-sided coating of the present invention is of a far greater industrial value than the conventional one-sided coating in view of such effects that the distortion of the base plate is restricted to a minimum and a cured coating film having a uniform thickness can be obtained.

In accordance with the present invention, the following three steps that the coating liquid is simultaneously applied to opposite planar surfaces of the base plate while rotating the base plate, then the spinner operation is performed for uniforming the thickness of the coating films and thereafter, ultraviolet rays are irradiated onto the coating films for curing the coating films while rotating the base plate, are conducted continuously. Namely, in accordance with the present invention, the coating liquid application process, spinner operation process, and ultraviolet irradiation process are conducted continuously without stopping rotation of the base plate, whereby the disc having the coating film of a uniform thickness and a minimum distortion can be provided.

## Claims

1. A disc coating method comprising the steps of simultaneously applying a coating liquid (4) in a first step to opposite surfaces of a plastic disc (1') by rotating at a first speed said disc (1') mounted vertically on a rotary shaft (5) and in another step simultaneously curing the coating liquid (4) on the opposite surfaces of said disc (1') while rotating said disc (1'),
characterized in that
in the first step the coating liquid (4) is applied to the disc (1'), while the disc is rotating at a speed of not more than 200 rpm;
in a second step excessive coating liquid (4) is removed from said disc (1') by rotating said disc (1') at a second speed higher than the first speed; and that
in a third step the liquid (4) is cured by simultaneously irradiating light energy onto the opposite surfaces of said disc (1') while rotating said disc (1') at a third speed higher than the first speed but equal to or lower than the second speed and keeping said disc (1') disposed vertically during the second and third steps, said disc (1') being composed of three layers, namely two plastic plates (1) and a recording layer (3) which is required for optical recording and reproducing and is interposed between said two plastic plates (1), and said coating liquid (4) forming a hard cured coating film (2) coated on the opposite surfaces of said disc (1').

2. A disc coating method according to claim 1,
characterized in that excessive coating liquid is removed from said disc (1') in the second step by rotating said disc at a speed between 1000 and 2000 rpm; and
the coating liquid (4) is cured in the third step while rotating said disc (1') at a speed of 2000 rpm or less.

3. A disc coating method as claimed in claim 1 or 2,
wherein said disc (1') is kept rotating during time periods between the first and second steps and between the second and third steps.

4. A disc coating method as claimed in any one of claims 1 to 3,
wherein the coating liquid (4) is an ultravioletcuring coating compound.

5. A disc coating method as claimed in any one of claims 1 to 4,
wherein the coating liquid on the opposite surfaces of the disc is cured into coating film (2) having an average thickness of 2 micrometer.

## Patentansprüche

1. Verfahren zur Beschichtung von Disks, das die Schritte zum gleichzeitigen Auftragen einer Beschichtungsflüssigkeit (4) in einem ersten Schritt auf gegenüberliegende Flächen einer Kunststoff-Disk (1') durch Drehen bei einer ersten Geschwindigkeit, bei der die Disk (1') vertikal auf einer Drehwelle (5) aufgesetzt ist, und zum gleichzeitigen Aushärten der Beschichtungsflüssigkeit (4) auf den gegenüberliegenden Flächen der Disk (1') in einem anderen Schritt, während sich die Disk (1') dreht, aufweist, dadurch gekennzeichnet, daß
in dem ersten Schritt die Beschichtungsflüssigkeit (4) auf die Disk (1') aufgetragen wird, während sich die Disk (1') bei einer Geschwindigkeit von nicht mehr als 200 UpM dreht;
daß in dem zweiten Schritt überschüssige Beschichtungsflüssigkeit (4) von der Disk (1') durch Drehung der Disk (1') bei einer zweiten Geschwindigkeit, die höher ist als die erste Geschwindigkeit, entfernt wird; und daß
in einem dritten Schritt die Flüssigkeit (4) auf den gegenüberliegenden Flächen der Disk (1') gleichzeitg durch Bestrahlungslichtenergie ausgehärtet wird, während die Disk (1') sich bei einer dritten Geschwindigkeit, die größer ist als die erste Geschwindigkeit, jedoch kleiner als die oder gleich der zweiten Geschwindigkeit ist, dreht und während der zweiten und dritten Schritte vertikal angeordnet gehalten wird, wobei die Disk (1') aus drei Schichten zusammengesetzt wird, nämlich zwei Kunststoff-Disks (1') und einer Aufnahmeschicht (3), welche für optische Aufnahme und Wiedergabe benötigt wird und zwischen den zwei Kunststoff-Disks (1') gelegt wird, und die Beschichtungsflüssigkeit (4) einen harten ausgehärteten Schutzfilm (2) bildet, der die gegenüberliegenden Flächen der Disk (1') überzieht.

2.   Verfahren zum Schutz von Disks nach Anspruch 1,
dadurch gekennzeichnet, daß überschüssige Beschichtungsflüssigkeit (4) von der Disk (1') in dem zweiten Schritt durch Drehen der Disk bei einer Geschwindigkeit zwischen 1000 und 2000 UpM entfernt wird; und die Beschichtungsflüssigkeit (4) in dem dritten Schritt, während sich die Disk (1') bei einer Geschwindigkeit von 2000 UpM oder weniger dreht, ausgehärtet wird.

3.   Verfahren zum Schutz von Disks nach Anspruch 1 oder 2,
dadurch gekennzeichnet, daß die Disk (1') während der Zeitdauer zwischen dem ersten und zweiten Schritt und zwischen dem zweiten und dritten Schritt in Drehung gehalten wird.

4.   Verfahren zum Schutz von Disks nach einem der Ansprüche 1 bis 3,
dadurch gekennzeichnet, daß die Beschichtungsflüssigkeit (4) eine ultraviolett-aushärtende Beschichtungskomponente aufweist.

5.   Verfahren zum Schutz von Disks nach einem der vorhergehenden Ansprüche 1 bis 4, bei dem die Beschichtungsflüssigkeit (4) auf den gegenüberliegenden Flächen der Disk zu einem Schutzfilm (2) ausgehärtet wird, der eine durchschnittliche Dicke von 2 Mikrometern aufweist.


## Revendications

1.   Procédé de revêtement de disques comprenant les phases consistant à appliquer simultanément un liquide de revêtement (4) dans une première phase sur les surfaces opposées d'un disque (1') en matière plastique en faisant tourner ledit disque (1') monté verticalement sur un arbre rotatif (5) à une première vitesse, puis, dans une autre phase, à durcir simultanément le liquide de revêtement (4) sur les surfaces opposées dudit disque (1') pendant qu'on fait tourner ledit disque (1'),
caractérisé en ce que,
dans la première phase, le liquide de revêtement (4) est déposé sur le disque (1') pendant que le disque (1') tourne à une vitesse non supérieure à 200 tr/min ;
dans une deuxième phase, le liquide de revêtement (4) en excès est éliminé dudit disque (1') en faisant tourner ledit disque (1') à une deuxième vitesse supérieure à la première vitesse ; et que
dans une troisième phase, le liquide (4) est durci par projection simultanée d'une énergie lumineuse sur les surfaces opposées dudit disque (1') pendant qu'on fait tourner ledit disque (1') à une vitesse supérieure à la première vitesse mais égale ou inférieure à la deuxième vitesse, et ledit disque (1') est maintenu disposé verticalement pendant les deuxième et troisième phases, ledit disque (1') étant composé de trois couches, à savoir deux plaques de matière plastique (1) et une couche de revêtement (3) qui est nécessaire pour l'enregistrement et la reproduction optique et qui est interposée entre les deux plaques de matière plastique (1), et ledit liquide de revêtement (4) formant un film (2) de revêtement durci dur, déposé sur les surfaces opposées dudit disque (1').

2.   Procédé de revêtement de disques selon la revendication 1, caractérisé en ce que le liquide de revêtement en excès est éliminé dudit disque (1) dans la deuxième phase en faisant tourner ledit disque à une vitesse d'entre 1000 et 2000 tr/min ; et
le liquide de revêtement (4) est durci dans la troisième phase pendant qu'on fait tourner le disque (1') à une vitesse de 2000 tr/min ou moins.

3.   Procédé de revêtement de disque selon la revendication 1 ou 2, dans lequel ledit disque (1') est maintenu en rotation pendant des périodes de temps comprises entre les première et deuxième phases et entre les deuxième et troisième phases.

4.   Procédé de revêtement de disque selon une quelconque des revendications 1 à 3, dans lequel le liquide de revêtement (4) est un composé de revêtement durcissable par les ultraviolets.

5.   Procédé de revêtement de disque selon une quelconque des revendications 1 à 4, dans lequel le liquide de revêtement déposé sur les surfaces opposées du disque est durci pour former un film de revêtement (2) ayant une épaisseur moyenne de 2 micromètres.

Fig. 1

Fig. 2

Fig. 3